# EUROPÄISCHE PATENTSCHRIFT

(11) **EP 1 954 440 B1**
(45) Veröffentlichungstag und Bekanntmachung des Hinweises auf die Patenterteilung: **29.07.2009**
(21) Anmeldenummer: 06819333.3
(22) Anmeldetag: 08.11.2006
(51) Int. Cl.: B23Q 3/155, B23Q 3/157, B23Q 1/48

(54) **MASCHINE MIT EINER MECHANISCHEN FÜHRUNG ZUR FÜHRUNG DER BEWEGUNG EINER ERSTEN UND EINER ZWEITEN VORRICHTUNG**
MACHINE COMPRISING A MECHANICAL GUIDE ELEMENT FOR GUIDING THE DISPLACEMENT OF A FIRST AND A SECOND DEVICE
MACHINE POURVUE D'UN ELEMENT DE GUIDAGE MECANIQUE POUR LE GUIDAGE DU MOUVEMENT D'UN PREMIER ET D'UN SECOND DISPOSITIF

(30) Priorität: 30.11.2005 DE 102005057174
(43) Veröffentlichungstag der Anmeldung: 13.08.2008
(73) Patentinhaber: SIEMENS AKTIENGESELLSCHAFT, 80333 München (DE)
(72) Erfinder: BRETSCHNEIDER, Jochen, 73732 Esslingen (DE); KLAUS, Maximilian, 70469 Stuttgart (DE)
(86) Internationale Anmeldenummer: PCT/EP2006/068237
(87) Internationale Veröffentlichungsnummer: WO 2007/062966

(56) Entgegenhaltungen:
- DE-A1- 19 510 498
- DE-A1- 19 521 846
- GB-A- 2 082 484

## Beschreibung

Die Erfindung betrifft eine Maschine mit einer mechanischen Führung.

Bei Maschinen, wie z.B. Werkzeugmaschinen, Produktionsmaschinen und/oder Robotern, weist jede Maschineachse eine mechanische Führung zur Führung der Bewegung einer einzelnen Vorrichtung wie z.B. einer Werkzeugspindel oder einer Werkstückhaltevorrichtung entlang der Führung auf. Handelsüblich wird bei der Bearbeitung, z.B. eines Werkstücks, die Werkzeugspindel und/oder die Werkstückhaltevorrichtung mittels einer jeweilig zugeordneten Antriebseinrichtung bewegt. Neben diesen so genannten NC (Numerical Control) geführten Maschinenachsen besitzen handelsübliche Maschinen auch so genannten PLC (Programmable Logic Control) geführte Maschinenachsen, die das Bewegen z.B. einer Werkzeugwechselvorrichtung (Werkzeugwechsler) ermöglichen. Soll ein Werkzeug für einen neuen Bearbeitungsvorgang gewechselt werden, z.B. von einer Fräsbearbeitung zu einer Bohrbearbeitung, dann wird handelsüblich zunächst der Fräser angehalten und die den Fräser antreibende Werkzeugspindel wird entlang der Führung auf eine Position verschoben an der eine Werkzeugwechselvorrichtung den Werkzeugwechsel durchführen kann. Häufig ist diese Position aber relativ weit von der eigentlichen Position an dem die Fräsbearbeitung stattfindet entfernt, so dass für die Bewegung der Werkzeugspindel relativ viel Zeit benötigt wird und somit der Produktionsvorgang für längere Zeit angehalten werden muss.

Weiterhin klappt bei handelüblichen Maschinen die Werkzeugwechselvorrichtung aus einer Ruheposition zur Wechselung des Werkzeugs heraus. Der Bewegungsvorgang der Werkzeugwechselvorrichtung wird dabei auf einer anderen von der Führung der Werkzeugspindel unterschiedlichen Führung geführt. Diese Lösung ist mechanisch relativ aufwendig.

Aus der gattungsgelenden DE 195 10 498 ist eine Werkzeugwechseleinrichtung für Werkzeugmaschinen mit einem aus mehreren Teilspeichern bestehenden Werkzeugspeicher, einen längs der Teilspeicher verfahrbaren Wechslerständer und mit einem am Wechslerständer vertikal verfahrbaren Greiferschlitten bekannt.

Aus der DE 195 21 846 ist eine numerisch gesteuerte Bearbeitungsmaschine, die zwei in einer gemeinsamen vertikalen Ebene verfahrbare, um horizontale Achsen schwenkbare Spindelstöcke, die auf gegenüberliegenden Seiten ein rotierendes Werkstückspannmittel und mindestens eine Werkzeugaufnahme tragen, bekannt.

Es ist Aufgabe der Erfindung die mechanische Konstruktion einer Werkzeugmaschine zu vereinfachen.

Diese Aufgabe wird gelöst durch eine Werkzeugmaschine mit einer mechanischen Führung zur Führung der Bewegung einer Werkzeugspindel und einer Werkzeugwechselvorrichtung, wobei die Maschine eine erste Antriebseinrichtung zur Bewegung der Werkzeugspindel entlang der Führung aufweist, wobei die Maschine eine zweite Antriebseinrichtung zur Bewegung der Werkzeugwechselvorrichtung entlang derselben Führung wie die Werkzeugspindel aufweist.

Vorteilhafte Ausbildungen der Erfindung ergeben sich aus den abhängigen Ansprüchen Es erweist sich als vorteilhaft, wenn die erste Antriebseinrichtung und die zweite Antriebseinrichtung als Linearmotoren ausgebildet sind. Linearmotoren stellen bei Maschinen übliche Antriebseinrichtungen dar.

In diesem Zusammenhang erweist es sich als vorteilhaft, wenn ein bewegliches Primärteil der ersten Antriebseinrichtung und ein bewegliches Primärteil der zweiten Antriebseinrichtung ein gemeinsames ortsfestes Sekundärteil als Reaktionsteil benutzen. Wenn sowohl das Primärteil des ersten Linearmotors und das Primärteil des zweiten Linearmotors ein gemeinsames festes Sekundärteil als Reaktionsteil benutzen kann ein weiteres normalerweise notwendiges zweites Reaktionsteil entfallen.

Ferner erweist es sich als vorteilhaft, wenn die Erfassung der Lage der ersten und der zweiten Vorrichtung mittels eines von der ersten und der zweiten Vorrichtung gemeinsam verwendeten Maßstabs erfolgt. Durch diese Maßnahme kann auf die Verwendung eines zweiten Maßstabs verzichtet werden.

Zwei Ausführungsbeispiele der Erfindung sind in der Zeichnung dargestellt und werden im Folgenden näher erläutert. Dabei zeigen:

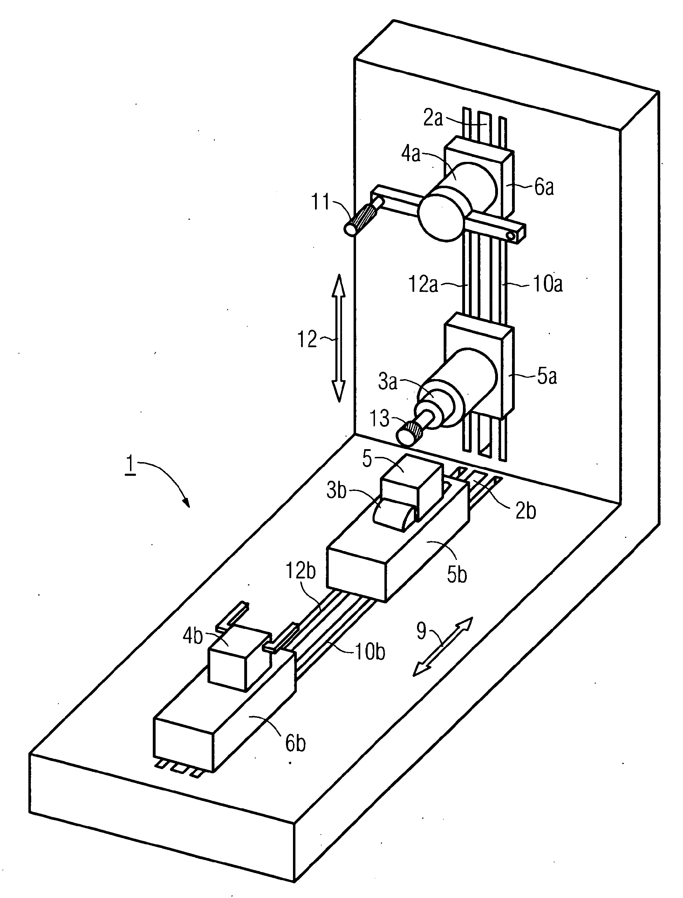

FIG 1 eine erfindungsgemäße Maschine.

In FIG 1 ist in Form einer schematisierten Darstellung eine Maschine 1 dargestellt, die im Rahmen des Ausführungsbeispiels als Werkzeugmaschine ausgebildet ist. Die Maschine weist eine erste Vorrichtung 3a, die im Rahmen des Ausführungsbeispiels als Werkzeugspindel ausgebildet ist. Die Werkzeugspindel treibt rotierend ein Werkzeug 13 an, das im Rahmen des Ausführungsbeispiels als Fräser ausgebildet ist. Mit Hilfe des Werkzeugs 13 wird ein Werkstück 5 bearbeitet. Weiterhin weist die Maschine eine zweite Vorrichtung 4a auf, die im Rahmen des Ausführungsbeispiels als Werkzeugwechselvorrichtung ausgebildet ist. Mit Hilfe der Werkzeugwechselvorrichtung kann der Fräser z.B. gegen einen Bohrer 11 ausgetauscht werden und damit eine Bohrbearbeitung durchgeführt werden.

Erfindungsgemäß weist die Maschine eine mechanische Führung 2a zur Führung der Bewegung der ersten Vorrichtung 3a und der zweiten Vorrichtung 4a auf. Die Bewegung wird dabei, im Rahmen des Ausführungsbeispiels, in Form einer senkrechten Bewegung in Richtung des Pfeils 12 durchgeführt. Die Bewegung der zweiten Vorrichtung 4a findet somit entlang derselben Führung wie die Bewegung der erste Vorrichtung 3a statt. Beide Vorrichtungen 3a und 4a benutzen somit eine gemeinsame Führung 2a. Mit Hilfe einer ersten Antriebseinrichtung wird die erste Vorrichtung 3a entlang der Führung 3a bewegt. Mit Hilfe einer zweiten Antriebseinrichtung wird die zweite Vorrichtung 4a entlang derselben Führung 2a bewegt. Die erste Antriebseinrichtung und die zweite Antriebseinrichtung können dabei konventionell mit Hilfe von rotatorischen Motoren, die über Kugelrollenspindeln die jeweils zugeordnete Vorrichtung bewegen, ausgebildet sein. Die Maschine weist somit für die zweite Vorrichtung 4a, d.h. für die Werkzeugwechselvorrichtung keine separate Führung mehr auf, d.h. es ist nur noch eine gemeinsame Führung 2a für die Werkzeugspindel und die Werkzeugwechselvorrichtung vorhanden. Dies führt zu einer deutlichen Reduktion des konstruktiven Aufwandes, da die Werkzeugwechselvorrichtung nicht mehr in Form einer separaten Maschinenachse realisiert ist. Weiterhin kann der Werkzeugwechselvorrichtung zum Auswechseln des Werkzeugs 13 in die Nähe des Bearbeitungsprozesses gefahren werden und der Werkzeugwechsel wird in der Nähe des Bearbeitungsprozesses ausgeführt. Es ist somit nicht mehr nötig, dass die Werkzeugspindel für den Werkzeugwechsel erst in eine vom Arbeitsprozess entfernte Position verfahren werden muss.

In dem Ausführungsbeispiel sind dabei in vorteilhafter Weise die erste Antriebseinrichtung und die zweite Antriebseinrichtung als Linearmotoren ausgebildet. Die erste Vorrichtung 3a ist hierzu mit dem beweglichen Primärteil 5a der ersten Antriebseinrichtung verbunden. Das Primärteil 5a bildet zusammen mit dem ortsfesten Sekundärteil 10a, der als Reaktionsteil genutzt wird, einen ersten Linearmotor. Das Primärteil 6a der zweiten Antriebseinrichtung bildet zusammen mit demselben Sekundärteil 10a einen zweiten Linearmotor. Die erste Vorrichtung 3a ist mit dem Primärteil 5a der ersten Antriebseinrichtung verbunden und die zweite Vorrichtung 4a ist mit dem Primärteil 6a der zweiten Antriebseinrichtung verbunden. Das Primärteil 5a und das Primärteil 6a benutzen somit nur ein gemeinsames ortsfestes Sekundärteil als Reaktionsteil, was den Vorteil hat, dass die mechanische Konstruktion noch einmal vereinfacht werden kann in dem die Baulängen der Primärteile 5a und 6a und die elektrischen Wicklungen der Primärteile entsprechend an die benötigte Leistung angepasst werden können. Hierdurch können Antriebskraft und der Strombedarf der Antriebe optimiert werden. Mit Hilfe geeigneter Überlast- oder Dauerlast-Primärteile kann eine optimale thermische Auslastung der Linearmotoren erzielt werden.

Die Erfassung der Lage der ersten und zweiten Vorrichtung erfolgt dabei mittels eines von der ersten und der zweiten Vorrichtung 3a und 4a gemeinsamen verwendeten Maßstabs 12a, der längs der Führung 2a angeordnet ist. Somit ist auch nur ein einzelner Maßstab zur Positionsbestimmung der ersten Vorrichtung 3a und der zweiten Vorrichtung 4a notwendig, was den konstruktiven Aufwand weiter reduziert.

In FIG 1 ist weiterhin eine zweite Ausbildung der Erfindung dargestellt. Die Maschine weist neben der schon beschriebenen senkrecht verlaufenden Führung 2a eine in waagrechte Richtung (siehe Pfeil 9) verlaufende Führung 2b auf, die im Rahmen des Ausführungsbeispiels als V-förmige Nut realisiert ist. Die erste Vorrichtung ist im Rahmen dieser Ausbildung der Erfindung als Werkstückhaltevorrichtung 3b ausgebildet in der das Werkstück 5 eingespannt ist und die mittels des Primärteils 5b einer ersten Antriebseinrichtung entlang der Führung 2b bewegt wird. Das Primärteil 5b bildet zusammen mit einem Sekundärteil 10b, das als Reaktionsteil benutzt wird, einen Linearmotor. Mit Hilfe einer im Rahmen dieser Ausbildung der Erfindung vorliegenden zweiten Antriebseinrichtung in Form des Primärteils 6b wird eine, im Rahmen dieser Ausbildung der Erfindung, vorliegende zweiten Vorrichtung 4b, die als Werkzeugtransportvorrichtung ausgebildet ist, entlang der Führung 2b bewegt. Das Primärteil 6b bildet zusammen mit dem Sekundärteil 10b einen Linearmotor. Die beiden Primärteile 5b und 6b benutzen somit wieder ein gemeinsames Sekundärteil 10b als Reaktionsteil.

Mit Hilfe der Erfindung braucht nun für einen Wechsel des Werkstücks 5 die Werkstückhaltevorrichtung 3b nicht mehr von dem Arbeitsprozess längs der Führung 2b weggefahren werden, sondern die Werkstückstransportvorrichtung 4b kann ein zu bearbeitendes Werkstück 5 an den Ort der Bearbeitung transportieren und es von dort wieder abholen. Es ergeben sich somit, bei dieser zweiten Ausführungsform der Erfindung, die gleichen Vorteile wie schon bei der ersten Ausführungsform weiter oben ausgeführt.

Weiterhin wird auch genau wie bei der oben beschriebenen ersten Ausbildung der Erfindung die Lage der ersten Vorrichtung 3b und die Lage der zweiten Vorrichtung 4b mit Hilfe eines gemeinsamen genutzten Maßstabes 12b bestimmt.

## Patentansprüche

1. Werkzeugmaschine mit einer mechanischen Führung (2a) zur Führung der Bewegung einer Werkzeugspindel (3a) und einer-Werkzeugwechselvorrichtung (4a), wobei die Maschine eine erste Antriebseinrichtung (5a,10a) zur Bewegung der Werkzeugspindel (3a) entlang der Führung (2a) aufweist,
**dadurch gekennzeichnet, dass** die Maschine eine zweite Antriebseinrichtung (6a,10a) zur Bewegung der Werkzeugwechselvorrichtung (4a) entlang derselben Führung (2a) wie die Werkzeugspindel (3a) aufweist.

2. Werkzeugmaschine nach Anspruch 1, **dadurch gekennzeichnet, dass** die erste Antriebseinrichtung (5a, 10a) und die zweite Antriebseinrichtung (6a,10a) als Linearmotoren ausgebildet sind.

3. Werkzeugmaschine nach Anspruch 2, **dadurch gekennzeichnet, dass** ein bewegliches Primärteil (5a) der ersten Antriebseinrichtung und ein bewegliches Primärteil (6a) der zweiten Antriebseinrichtung ein gemeinsames ortsfestes Sekundärteil (10a) als Reaktionsteil benutzten.

4. Werkzeugmaschine nach einem der vorhergehenden Ansprüche, **dadurch gekennzeichnet, dass** die Erfassung der Lage der Werkzeugspindel (3a) und der Werkzeugwechselvorrichtung (4a) mittels eines von der Werkzeugspindel und der Werkzeugwechselvorrichtung gemeinsam verwendeten Maßstabs (12a) erfolgt.

## Claims

1. Machine tool comprising a mechanical guide element (2a) for guiding the displacement of a tool spindle (3a) and a tool changing device (4a), the machine having a first drive apparatus (5a, 10a) for displacing the tool spindle (3a) along the guide element (2a), **characterized in that** the machine has a second drive apparatus (6a, 10a) for displacing the tool changing device (4a) along the same guide element (2a) as the tool spindle (3a).

2. Machine tool according to claim 1, **characterized in that** the first drive apparatus (5a, 10a) and the second drive apparatus (6a, 10a) are embodied as linear motors.

3. Machine tool according to claim 2, **characterized in that** a displaceable primary part (5a) of the first drive apparatus and a displaceable primary part (6a) of the second drive apparatus use a shared stationary secondary part (10a) as a reaction part.

4. Machine tool according to one of the preceding claims, **characterized in that** the detection of the position of the tool spindle (3a) and the tool changing device (4a) is performed by means of a scale (12a) jointly used by the tool spindle and the tool changing device.

## Revendications

1. Machine outil ayant un guidage ( 2a ) mécanique pour guider le mouvement d'une broche ( 3a ) d'outil et un dispositif ( 4a ) de changement d'outil, la machine ayant un premier dispositif ( 5a, 10a ) d'entraînement pour déplacer la broche ( 3a ) d'outil le long du guidage ( 2a ), **caractérisée en que** la machine a un deuxième dispositif ( 6a, 10a ) d'entraînement pour déplacer le dispositif ( 4a ) de changement d'outil le long du même guidage ( 2a ) que la broche ( 3a ) d'outil.

2. Machine outil suivant la revendication 1, **caractérisée en ce que** le premier dispositif ( 5a, 10a ) d'entraînement et le deuxième dispositif ( 6a, 10a ) d'entraînement sont constitués sous la forme de moteurs linéaires.

3. Machine outil suivant la revendication 2, **caractérisée en ce qu'**une partie ( 5a ) primaire mobile du premier dispositif d'entraînement et une partie ( 6a ) primaire mobile du deuxième dispositif d'entraînement utilise, comme partie de réaction, une partie ( 10a ) secondaire commune à poste fixe.

4. Machine outil suivant l'une des revendications précédentes,
**caractérisée en ce que** la détection de la position de la broche ( 3a ) d'outil et du dispositif ( 4a ) de changement d'outil s'effectue au moyen d'une règle graduée ( 12a ) utilisée conjointement par la broche d'outil et par le dispositif de changement d'outil.
